# EUROPÄISCHE PATENTSCHRIFT

(11) **EP 3 350 568 B1**
(45) Veröffentlichungstag und Bekanntmachung des Hinweises auf die Patenterteilung: **06.11.2019**
(21) Anmeldenummer: 16763026.8
(22) Anmeldetag: 08.09.2016
(51) Int. Cl.: G01N 15/06, G01N 27/60, G01M 15/10

(54) **SENSOR UND VERFAHREN ZUR HERSTELLUNG EINES SENSORS**
SENSOR AND METHOD FOR PRODUCING A SENSOR
CAPTEUR ET PROCÉDÉ POUR FABRIQUER UN CAPTEUR

(30) Priorität: 17.09.2015 DE 102015217794
(43) Veröffentlichungstag der Anmeldung: 25.07.2018
(73) Patentinhaber: Continental Automotive GmbH, 30165 Hannover (DE)
(72) Erfinder: MATTMANN, Erich, 55262 Heidesheim (DE); NITZSCHKE, Michael, 65795 Hattersheim (DE); WEIGERT, Christian, 84066 Mallersdorf-Pfaffenberg (DE); COLLIER, Gary, 93059 Regensburg (DE); GERULL, Andreas, 93105 Tegernheim (DE); KIEFL, Christian, 94377 Münster (DE); SCHWARZKOPF, Kay, 93128 Regensburg (DE)
(86) Internationale Anmeldenummer: PCT/EP2016/071136
(87) Internationale Veröffentlichungsnummer: WO 2017/045990

(56) Entgegenhaltungen:
- DE-A1-102004 056 417
- DE-A1-102008 002 446
- DE-A1-102013 017 745
- US-A1- 2013 219 990

## Beschreibung

Die Erfindung betrifft einen Sensor mit einem Gehäuse, in dem ein Sensorelement angeordnet ist, sowie ein Verfahren zu dessen Herstellung.

Immer strengere gesetzliche Vorschriften bezüglich zulässiger Schadstoffemissionen bei Kraftfahrzeugen mit Brennkraftmaschinen, machen es erforderlich, die Schadstoffemissionen beim Betrieb der Brennkraftmaschine so gering wie möglich zu halten. Hierdurch ist es insbesondere für den Einsatz von Abgasnachbehandlungssystemen, wie Katalysatoren, erforderlich die Abgasparameter im Abgastrakt sehr genau zu bestimmen.

Zur Bestimmung dieser Abgasparameter können zum Beispiel Stickoxidsensoren, Hochtemperatursensoren, Sauerstoffsensoren und/oder Rußsensoren eingesetzt werden.

Aus dem Fachbuch "Handbuch Verbrennungsmotoren", Herausgeber Richard von Basshuysen/Fred Schäfer, 2. Auflage, Juni 2002, Friedrich Vieweg & Sohn Verlagsgesellschaft mbH Braunschweig/ Wiesbaden, Seite 589 ff., ist ein Stickoxidsensor auf der Basis von ZrO₂ Keramik bekannt, der zwei Kammern aufweist. In der ersten Kammer wird durch Anlegen eines Pumpstroms ein konstanter Partialdruck des im Abgas enthaltenen Sauerstoffs hergestellt. Der Pumpstrom ist umgekehrt proportional zum Luftkraftstoffverhältnis. In der zweiten Kammer wird das im Abgas enthaltene Stickoxid durch Anlegen eines weiteren Stroms zersetzt. Hieraufhin kann an einer Messelektrode in der zweiten Kammer ein Strom gemessen werden, der proportional zum Stickoxidgehalt im Abgas ist und der das Messsignal des Stickoxidsensors bildet.

Die deutschen Offenlegungsschrift DE 199 59 871 A1 offenbart ein Rußmessverfahren und eine Vorrichtung dafür. Es wird vorgeschlagen, ein elektrisches Feld zwischen einer von dem Gasstrom durchströmten Mantel-Elektrode und einer Innen-Elektrode innerhalb der Mantel-Elektrode durch Anlegen einer konstanten elektrischen Gleichspannung zu erzeugen und den Ladestrom zur Aufrechterhaltung des konstanten Gleichspannung zwischen Mantel-Elektrode und Innen-Elektrode zu messen.

Alle im Abgasstrang eingesetzten Sensoren sind sehr hohen Temperaturen (bis etwa 1000 °C) und sehr hohen Temperaturschwankungen ausgesetzt. Bei einer abgekühlten Brennkraftmaschine können die Temperaturen am Sensor auf unter -30 °C fallen und bei einer heißen Brennkraftmaschine auf über 1000 °C steigen, sodass Temperaturdifferenzen von mehr als 1030 °C von dem Sensor unbeschadet verkraftet werden müssen und dies über eine Vielzahl von Temperaturzyklen. Dabei werden enorme Anforderungen an die elektrischen Durchführungen des Sensors gestellt, insbesondere wenn diese Durchführungen gasdicht ausgebildete sein sollen. Zudem werden einige Sensoren im Abgasstrang mit sehr hohen Spannungen von etwa 1000 V betrieben, was zusätzliche Anforderungen an die verwendeten Durchführungen stellt.

Ein auf dem elektrostatischen Messprinzip basierender Partikelsensor ist aus der US 2013/0219990 A1 bekannt.

Die DE 10 2004 056 417 A1 betrifft einen Gasmessfühler zur Bestimmung einer physikalischen Eigenschaft eines Messgases.

Aus der DE 10 2008 002 446 A1 ist ein schichtförmig aufgebautes Sensorelement bekannt, insbesondere zum Nachweis einer physikalischen Eigenschaft eines Gases oder einer Flüssigkeit.

Die Aufgabe der Erfindung ist es, einen Sensor bereitzustellen, der dauerhaft mindestens eine gasdichte elektrische Durchführung durch sein Gehäuse aufweist.

Die Aufgabe wird durch die Merkmale der unabhängigen Patentansprüche gelöst. Vorteilhafte Ausgestaltungen der Erfindung sind in den Unteransprüchen gekennzeichnet.

Dadurch, dass die elektrische Durchführung einen keramischen Formkörper aufweist, der mindestens eine Durchbohrung aufweist, die ein erstes Ende und ein zweites Ende aufweist, wobei die Durchbohrung vom ersten Ende bis zum zweiten Ende mit einer metallischen Paste gefüllt ist und der keramische Formkörper mit der metallischen Paste in einem Sinterprozess verbunden ist und im Bereich des ersten Endes und/oder des zweiten Endes der Durchbohrung mindestens ein metallisches Rohrstück auf die gesinterte metallische Paste aufgebracht ist, wird eine dauerhaft gasdichte Durchführung erzeugt, die auch bei starken Temperaturwechseln ihre Dichtheit nicht verliert. Der Sinterprozess führt zu einer Verbindung zwischen der metallischen Paste und dem keramischen Formkörper, die extrem hoher Festigkeit ist und eine besondere Langlebigkeit aufweist.

Gemäß einer vorteilhaften Ausgestaltung ist der Sensor zur Messung in Gasen mit einer Temperatur über 400 °C ausgebildet. Diese Temperaturen kommen regelmäßig im Abgasstrang von Kraftfahrzeugen vor, womit besondere Ansprüche an die gasdichten elektrischen Durchführungen gestellt werden. Darüber hinaus werden durch das zyklische Aufheizen und Abkühlen der Abgasanlage sehr große Temperaturschwankungen hervorgerufen, die nur mit einer besonders hochwertigen elektrischen Durchführung kompensiert werden können.

Gemäß einer weiteren Ausgestaltung ist die metallische Paste eine Wolfram und/oder Platinpaste. Wolfram und/oder Platinpaste weisen eine sehr gute elektrische Leitfähigkeit auf und sie verbinden sich hervorragend im Sinterprozess mit dem keramischen Formkörper.

Gemäß einer weiteren vorteilhaften Ausgestaltung ist der Sensor als elektrostatischer Partikelsensor ausgebildet. Elektrostatische Partikelsensoren werden häufig mit sehr hohen Spannungen betrieben, was eine zusätzliche Anforderung an die elektrische Durchführung darstellt. Die elektrischen Durchführungen bei elektrostatischen Partikelsensoren müssen daher hochspannungsfest und gasdicht sein und diese Eigenschaften auch bei Temperaturen von etwa 1000 °C aufweisen und häufige Temperaturänderungen von über 1000 °C dauerhaft unbeschadet überstehen. Eine derart hochwertige elektrische Durchführung wird mit dem erfindungsgemäßen Sensor bereitgestellt.

Bei einer Weiterbildung ist das metallische Rohrstück als Guardrohr zur Formung eines elektrischen Feldes im Gehäuse des Sensors ausgebildet. Bei elektrostatischen Partikelsensoren werden derartige Guardrohre eingesetzt um Leckströme zu kompensieren, um zum Beispiel die Messung von Rußteilchen im Abgasstrom genauer zu gestalten. Dazu kann das metallische Rohrstück vorteilhaft durch Löten oder Schweißen an die gesinterte metallische Paste angebracht sein.

Wenn der Sinterprozess bei mindestens 1500 °C erfolgt, wird die Verbindung zwischen der metallischen Paste und dem keramischen Formkörper besonders hochwertig ausgebildet.

Ausführungsbeispiele der Erfindung sind im Folgenden anhand der schematischen Zeichnungen näher erläutert. Es zeigen:
- Figur 1: einen Sensor nach dem Stand der Technik,
- Figur 2: einen erfindungsgemäßen Sensor.

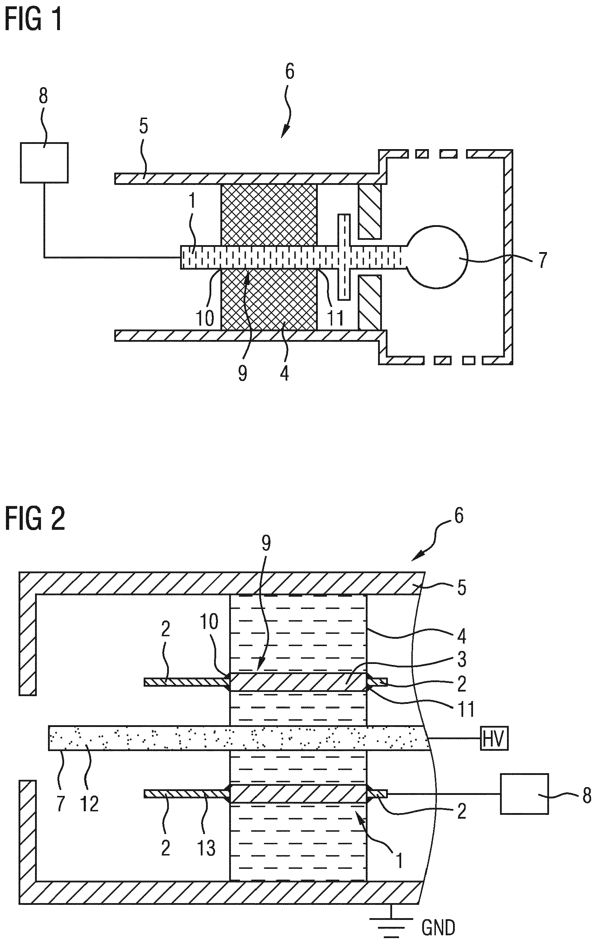

Figur 1 zeigt einen Sensor 6 nach dem Stand der Technik. Der Sensor 6 weist ein Gehäuse 5 auf, in dem ein Sensorelement 7 angeordnet ist. Das Sensorelement 7 kann z. B. ein elektronisches Sensorelement sein, das eine Temperatur, einen Druck oder Gasbestandteile misst. Das Sensorelement 7 kann aber auch eine einfache Elektrode sein, die mit Hilfe einer hohen Spannung ein elektrisches Feld erzeugt, das sich z. B. zwischen den Sensorelementen 7 und dem Gehäuse 5 ausbildet. Darüber hinaus weist der Sensor 6 nach dem Stand der Technik einen keramischen Formkörper 4 auf, in dem eine Durchbohrung 9 ausgebildet ist, die als elektrische Durchführung 1 genutzt wird. Die Durchbohrung 9 durch den keramischen Formkörper 4 weist ein erstes Ende 10 und ein zweites Ende 11 auf. An der elektrischen Durchführung 1 kann ein elektrisches Bauelement 8 angeschlossen sein, das sich außerhalb des Gehäuses 5 des Sensors 6 befindet. Das Sensorelement 7 ist somit elektrisch mit dem elektrischen Bauteil 8 verbunden, womit z. B. Signale vom Sensorelement 7 an das elektrische Bauteil 8 durch die elektrische Durchführung 1 übertragen werden können. Es ist aber auch denkbar, dass mit dem elektrischen Bauelement 8 über die elektrische Durchführung 1 an das Sensorelement 7, z. B. einer Hochspannung angelegt wird.

Figur 2 zeigt einen erfindungsgemäßen Sensor 6 mit einem Gehäuse 5, in dem das Sensorelement 7 angeordnet ist. In diesem Ausführungsbeispiel ist das Sensorelement 7 als einfache Elektrode 12 ausgebildet. Zwischen der Elektrode 12 und dem Gehäuse 5 des Sensors 6 kann sich ein elektrisches Feld ausbilden, in dem an die Elektrode 12 eine hohe Spannung HV angelegt wird und das Gehäuse 5 des Sensors 6 auf Masse GND gelegt wird. Im Gehäuse 5 des Sensors 6 sind weiterhin Guardrohre 13 zu erkennen, die zielgerichtet zur Formung des im Sensorgehäuse ausgebildeten elektrischen Feldes eingesetzt werden. Darüber hinaus ist eine Kompensation von Leckströmen mit Guardrohren 13 möglich. Das Gehäuse 5 des Sensors weist eine gasdichte elektrische Durchführung 1 auf. Mit dieser Durchführung 1 können Ströme und Spannungen von außerhalb des Gehäuses 5 angeordneten elektrischen Bauelementen 8 in das Gehäuse geleitet oder aus dem Gehäuse 5 abgeleitet werden. Die elektrische Durchführung 1 ist als keramischer Formkörper 4 ausgebildet, der mindestens eine Durchbohrung 9 aufweist. Die Durchbohrung 9 hat ein erstes Ende 10 und ein zweites Ende 11. Zu erkennen ist, dass die Durchbohrung 9 vom ersten Ende 10 bis zum zweiten Ende 11 mit einer metallischen Paste 3 gefüllt ist. Diese metallische Paste kann z. B. eine Wolframpaste oder eine Platinpaste sein. Der keramische Formkörper 4 wurde mit der metallischen Paste 3 in einem Sinterprozess verbunden. Die Temperatur bei dem Sinterprozess kann zum Beispiel 1.500 °C betragen. Im ersten Bereich des Formkörpers 4 und im zweiten Bereich des Formkörpers 4 sind metallische Rohrstücke, die zum Beispiel als Guardohre ausgebildet sein können, an die gesinterte metallische Paste 3 angebracht. Diese metallischen Rohrstücke 2 können z. B. durch Löten oder Schweißen an die gesinterte metallische Paste angebracht sein. Der erfindungsgemäße Sensor kann z. B. im Abgasstrang eines Kraftfahrzeuges zur Messung von Rußpartikeln eingesetzt werden. Im Abgasstrang eines Kraftfahrzeuges herrschen in der Regel sehr hohe Temperaturen von bis zu 1000 °C, bei denen der erfindungsgemäße Sensor 6 dauerhaft gasdichte elektrische Durchführungen 1 aufweisen muss. Sowohl die als Guardrohre 13 ausgebildeten Rohrstücke 2 können als erfindungsgemäßen Durchführung ausgebildet sein, als auch die das Sensorelement 7 bildende Elektrode 12. Der erfindungsgemäße Sensor 6 weist dauerhaft gasdichte elektrische Durchführungen auf, weil im Rahmen des Sinterprozesses die metallische Paste 3 mit dem Formkörper 4 eine dauerhaft dichte Verbindung eingeht.

## Patentansprüche

1. Sensor (6) mit einem Gehäuse (5) in dem ein Sensorelement (7) angeordnet ist und einer gasdichten elektrischen Durchführung (1) durch das Gehäuse (5), die dazu ausgebildet ist, elektrische Ströme und/oder Spannungen von außerhalb des Gehäuses (5) angeordneten elektrischen Bauelementen (8) in das Gehäuse (5) zu leiten und/oder aus dem Gehäuse (5) abzuleiten, **dadurch gekennzeichnet, dass** die elektrische Durchführung (1) einen keramischen Formkörper (4) aufweist, der mindestens eine Durchbohrung (9) aufweist, die ein erstes Ende (10) und ein zweites Ende (11) aufweist, wobei die Durchbohrung (9) vom ersten Ende (10) bis zum zweiten Ende (11) mit einer metallischen Paste (3) gefüllt ist und der keramische Formkörper (4) mit der metallischen Paste (3) in einem Sinterprozess verbunden ist und im Bereich des ersten Endes (10) und/oder des zweiten Endes (11) der Durchbohrung (9) mindestens ein metallisches Rohrstück (2) an die gesinterte metallische Paste (3) angebracht ist.

2. Sensor (6) nach Anspruch 1, **dadurch gekennzeichnet, dass** die metallische Paste (3) eine Wolfram und/oder Platinpaste ist.

3. Sensor (6) nach Anspruch 1, oder 2, **dadurch gekennzeichnet, dass** der Sensor (6) als elektrostatischer Partikelsensor ausgebildet ist.

4. Sensor (6) nach Anspruch 3, **dadurch gekennzeichnet, dass** das metallische Rohrstück (2) als Guardrohr zur Formung eines elektrischen Feldes im Gehäuse (5) des Sensors (6) ausgebildet ist.

5. Sensor (6) nach einem der vorgenannten Ansprüche, **dadurch gekennzeichnet, dass** das metallische Rohrstück (2) durch Löten oder Schweißen an die gesinterte metallische Paste (3) angebracht ist.

6. Verfahren zur Herstellung eines Sensors (6) mit einem Gehäuse (5) in dem ein Sensorelement (7) angeordnet ist und einer gasdichten elektrischen Durchführung (1) durch das Gehäuse (5), die dazu ausgebildet ist, elektrische Ströme und/oder Spannungen von außerhalb des Gehäuses (5) angeordneten elektrischen Bauelementen (8) in das Gehäuse (5) zu leiten und/oder aus dem Gehäuse abzuleiten, **dadurch gekennzeichnet, dass** die elektrische Durchführung (1) einen keramischen Formkörper (3) aufweist, in den mindestens eine Durchbohrung (9) eingebracht wird, die ein erstes Ende (10 und ein zweites Ende (11) aufweist, wonach die Durchbohrung (9) vom ersten Ende (10) bis zum zweiten Ende (11) mit einer metallischen Paste (3) gefüllt wird und der keramische Formkörper (4) mit der metallischen Paste (3) in einem Sinterprozess bei mindestens 1500 °C verbunden wird, woraufhin im Bereich des ersten Endes (10) und/oder des zweiten Endes (11) der Durchbohrung (9) mindestens ein metallisches Rohrstück an die gesinterte metallische Paste angebracht wird.

## Claims

1. Sensor (6) having a housing (5) in which a sensor element (7) is disposed, and a gas-tight electrical feedthrough (1) through the housing (5), said feedthrough (1) being configured for directing electrical currents and/or voltages from electrical components (8) that are disposed outside the housing (5) into the housing (5) and/or for diverting same out of the housing (5), **characterized in that** the electrical feedthrough (1) has a ceramic molded body (4) which has at least one through bore (9), the latter having a first end (10) and a second end (11), wherein the through bore (9) from the first end (10) up to the second end (11) is filled with a metallic paste (3), and the ceramic molded body (4) in a sintering process is connected to the metallic paste (3), and in the region of the first end (10) and/or of the second end (11) of the through bore (9) at least one metallic tube piece (2) is attached to the sintered metallic paste (3).

2. Sensor (6) according to Claim 1, **characterized in that** the metallic paste (3) is a tungsten and/or platinum paste.

3. Sensor (6) according to Claim 1 or 2, **characterized in that** the sensor (6) is configured as an electrostatic particle sensor.

4. Sensor (6) according to Claim 3, **characterized in that** the metallic tube piece (2) is configured as a guard tube for forming an electrical field in the housing (5) of the sensor (6) .

5. Sensor (6) according to one of the preceding claims, **characterized in that** the metallic tube piece (2) is attached to the sintered metallic paste (3) by soldering or welding.

6. Method for producing a sensor (6) having a housing (5) in which a sensor element (7) is disposed, and a gas-tight electrical feedthrough (1) through the housing (5), said feedthrough (1) being configured for directing electrical currents and/or voltages from electrical components (8) that are disposed outside the housing (5) into the housing (5) and/or for diverting same out of the housing, **characterized in that** the electrical feedthrough (1) has a ceramic molded body (3) into which at least one through bore (9) is incorporated, the latter having a first end (10) and a second end (11), wherein the through bore (9) from the first end (10) up to the second end (11) is filled with a metallic paste (3), and the ceramic molded body (4) in a sintering process at least at 1500°C is connected to the metallic paste (3), whereupon in the region of the first end (10) and/or of the second end (11) of the through bore (9) at least one metallic tube piece is attached to the sintered metallic paste.

## Revendications

1. Capteur (6) doté d'un boîtier (5) à l'intérieur duquel est agencé un élément capteur (7) et doté d'une traversée électrique hermétique aux gaz (1) à travers le boîtier (5), laquelle est réalisée pour conduire des courants et/ou tensions électriques depuis des composants électriques (8) agencés à l'extérieur du boîtier (5) vers le boîtier (5) et/ou d'en évacuer hors du boîtier (5), **caractérisé en ce que** la traversée électrique (1) comporte un corps conformé en céramique (4), lequel comporte au moins une perforation (9), laquelle comporte une première extrémité (10) et une deuxième extrémité (11), dans lequel la perforation (9) est remplie d'une pâte métallique (3) de la première extrémité (10) à la deuxième extrémité (11) et le corps conformé en céramique (4) est lié à la pâte métallique (3) par un procédé de frittage et au moins une section de tuyau métallique (2) est apposée à la pâte métallique frittée (3) dans la zone de la première extrémité (10) et/ou de la deuxième extrémité (11) de la perforation (9).

2. Capteur (6) d'après la revendication 1, **caractérisé en ce que** la pâte métallique (3) est une pâte de tungstène et/ou de platine.

3. Capteur (6) d'après la revendication 1 ou 2, **caractérisé en ce que** le capteur (6) est réalisé comme capteur de particules électrostatique.

4. Capteur (6) d'après la revendication 3, **caractérisé en ce que** la section de tuyau métallique (2) est réalisée comme tube de garde pour la formation d'un champ électrique dans le boîtier (5) du capteur (6).

5. Capteur (6) d'après l'une des revendications susnommées, **caractérisé en ce que** la section de tuyau métallique (2) est apposée à la pâte métallique frittée (3) par brasage ou par soudure.

6. Procédé de fabrication d'un capteur (6) doté d'un boîtier (5) à l'intérieur duquel un élément capteur (7) est agencé et d'une traversée électrique hermétique aux gaz (1) à travers le boîtier (5), laquelle est réalisée pour conduire des courants et/ou tensions électriques depuis des composants électriques (8) agencés à l'extérieur du boîtier (5) vers le boîtier (5) et/ou d'en évacuer hors du boîtier, **caractérisé en ce que** la traversée électrique (1) comporte un corps conformé en céramique (3), lequel étant doté d'au moins une perforation (9), laquelle comporte une première extrémité (10) et une deuxième extrémité (11), à la suite de quoi la perforation (9) est remplie d'une pâte métallique (3) de la première extrémité (10) à la deuxième extrémité (11) et le corps conformé en céramique (4) est lié à la pâte métallique (3) par un procédé de frittage à au moins 1500 °C et au moins une section de tuyau métallique est alors apposée à la pâte métallique frittée dans la zone de la première extrémité (10) et/ou de la deuxième extrémité (11) de la perforation (9).
